# EUROPEAN PATENT SPECIFICATION

(11) **EP 0 311 423 B1**
(45) Date of publication and mention of the grant of the patent: **03.01.1996**
(21) Application number: 88309372.6
(22) Date of filing: 07.10.1988
(51) Int. Cl.: C08J 5/18, B65D 81/20

(54) **Process for preparing uniaxially oriented filled films for controlled atmosphere packaging**
Verfahren zur Herstellung uniaxial orientierter, Füllstoff enthaltender Folien für Verpackungen in kontrollierter Atmosphäre
Procédé de préparation des films chargés uniaxialement orientés pour emballage sous atmosphère contrôlées

(30) Priority: 08.10.1987 GB 8723608
(43) Date of publication of application: 12.04.1989
(73) Proprietor: APPLIED EXTRUSION TECHNOLOGIES, INC., Salem Massachusetts 01970 (US)
(72) Inventor: Antoon, Mitchell Kelly, Jr., Wilmington Delaware 19810 (US)
(74) Representative: De Minvielle-Devaux, Ian Benedict Peter

(56) References cited:
- EP-A- 0 227 037
- EP-A- 0 253 667
- GB-A- 2 151 538
- US-A- 3 903 234

## Description

This invention relates to a uniaxially oriented polymeric film having an inert filler dispersed therein, a process for preparing such a film, and the use of such film in controlled atmosphere storage containers for fresh fruits and vegetables.

Maintaining the flavor, texture, and eating qualities of fresh fruits and vegetables and extending the shelf life of flowers (also referred to collectively as "produce") from the time of harvest through the time of consumption is an obvious problem. The most commonly used technique has been refrigeration. Some items, such as tomatoes, bananas, and citrus fruits, are routinely picked in a less-than-ripe condition and stored at reduced temperatures until they are sold. Other products, such as grapes and lettuce, are picked at maturity and refrigerated. The reduced temperature helps to retard further ripening, but only for relatively short time periods and may be detrimental to the keeping quality of the produce after it is exposed to room temperature.

For each produce type an optimum range of concentrations of CO₂ and O₂ exists at which its respiration is retarded and quality is improved to the greatest extent. For instance, some produce benefit 10 from relatively high levels of CO₂, e.g., strawberries and mushrooms, while others such as lettuce and tomatoes store better at lower levels of CO₂. Likewise, each produce type also has its own individual respiration rate, which can be expressed as cubic centimeters of oxygen per kg/hour.

It is known that the maturation-rate of produce can be reduced by controlling the atmosphere surrounding the produce so that an optimum O₂ range and relative concentrations of C0₂ to O₂ are maintained. For example, U.S. Patent Application Serial Number 123,465 (Anderson 1-2-3 case), filed November 20, 1987 discloses a packaging container for controlling the atmosphere during storage of produce to improve retention of the product's freshness by adjusting the CO₂-to-O₂ ratio; the environment is controlled by providing a biaxially oriented membrane panel of limited CO₂ and O₂ permeance in an otherwise substantially impermeable container. Other controlled atmosphere packaging containers are disclosed in U.S. Patents 3,102,777 and 3,450,542 and publication entitled "Controlling Atmosphere in a Fresh-Fruit Package" by P. Veeraju and M. Karel, Modern Packaging, Vol. 40, #2 (1966), pages 168, 170, 172, 174 and 254.

It is also known that thermoplastic polymers can be filled with inert fillers, cast into sheets, and stretched to form an oriented thermoplastic film. Examples of such methods are disclosed, for example, in U.S. Patents 3,903,234, 3,773,608, 4,359,497, and 4,626,252 and British Patent 2,151,538A. The ingredients and process parameters used determine the characteristics of the resulting product. Hence, a wide range of products have been produced depending on the needs of the industry. In the packaging industry a need still exists for producing a microporous film having highly consistent CO₂ and O₂ permeances throughout the film and a wide range of processing parameters.

EP-A-0227037 relates to a process for producing a porous film which comprises blending 30 to 80 parts by weight of an inorganic fine powder having a specific surface area of 15 m/g or less and an average particle size of 0.4 to 4 µm with 20 to 70 parts by weight of a polyolefin resin, followed by melt-molding the resulting blend into a film and then stretching the film to 2 to 7 times the original length at least in the uniaxial direction. The polyolefin resin preferably is or comprises linear low density polyethylene. In mixing the inorganic fine powder and the polyolefin resin, it is possible to optionally add various additives such as lubricant e.g. calcium stearate, piment, stabilizers ..., plasticiser, anti-static agent, etc.

US-A-3903234 relates to a process for preparing a thermoplastic film having a void content of at least about 30 to 70%, a fibrous surface having about 2 to 40 surface ruptures per square millimetre, and an oxygen permeability of about 900 to 10,000,000 cc/100 in-atm day-mil, consisting essentially of melt blending an alpha-mono-olefin polymer having a crystallinity of at least about 60% at room temperature and 25 to 50% by weight of an inert inorganic filler having an average particle size of 0.3 to 8 µm, wherein the blend has an elongation of at least 1000% at a temperature within the range which is above the line-drawing temperature and below the melting temperature of the polymer; forming a film from the melt blend; cooling the film to a temperature below the melting point; sequentially stretching the film at least about 2 times its original forming dimensions in mutually perpendicular directions in accordance with the limitations specified in that document; and cooling the film to room temperature.

Note that the measurement of the ingredients in the composition of the instant invention may be expressed either by volume or by weight. In some circumstances measurement by volume may be more convenient because the densities of the ingredients may differ significantly while their volume requirements may remain relatively close for optimum effectiveness in the invention. For example, hollow glass beads have extremely low density while CaCO₃ is relatively dense. Similarly, BaSO₄ differs in mass per unit volume from both the glass beads and CaCO₃. Hence, while a weight basis percentage range would have to be extremely wide to encompass all suitable ingredients, a percentage by volume range would remain narrow. Both measurements are provided throughout this application for the sake of comparison. It is however, the definitions by weight which are of primary importance.

According to the invention, a process for preparing a controlled atmosphere packaging (CAP) film in which a thermoplastic polymer is filled with an inert filler, cast into a sheet, and stretched to form an oriented film, is characterized by
a) melt blending in a vessel in a temperature range of 150°-300°C the ingredients,
   i) 36-60% by weight (or 64-84% by volume) of a polymer selected from the group of polypropylene homopolymers and copolymers,
   ii) 36-60% by weight (or 15-34% by volume) of an inert filler based on the weight of the polymer and filler, said filler having an average particle size of 0.3 to 14 µm,
   iii) 0.1 - 2.5% by weight (or 0.2-5% by volume) of a processing aid which is calcium stearate, zinc stearate, oleic acid or stearic acid, and
   (iv) 0-1.5% by weight (or 0-3% by volume) of a stabilizer
b) maintaining the moisture level in the melt blend below 700 ppm,
c) casting a film,
d) cooling the film to a temperature below the melting point of the film,
e) stretching the film in one of its dimensions at least about two times the corresponding original casting dimension with the temperature of the film during stretching being within a temperature range of 20 to 160°C and being above the line-drawing temperature and below the melting temperature of the polymer, the said uniaxial stretching of the film is terminated when the film has a CO₂ and O₂ permeance in the range of 77,500 to 155,000,000 cc/m atm-day (5,000 to 10,000,000 cc/100 in - atm-day) with a standard deviation of the permeance in the range of less than 35%, and
f) cooling the film to room temperature.

Preferably, the moisture level in the melt blend is maintained below 300 ppm, and the film is stretched uniaxially at least about 6.5 times its original casting dimensions.

Also according to the invention is the use of the process for preparing the CAP film according to the invention as a panel in at least one side of a container for the controlled atmosphere storage of fresh fruits and vegetables.

An example of a copolymer that can be used in the present invention is ethylene/propylene.

Fillers that can be used in this invention should be inorganic and inert to the polymer, have a relatively low interfacial surface tension making it practically noncohesive toward the polymer matrix, have an average particle size of 0.3 to 14 µm, and be present in the amount of 36 to 60 weight percent, preferably 40-55%, (on a volume basis 15-34% by volume, preferably 18-29% by volume) based on the total amount of polymer and filler present. The average particle size of a filler material is determined by a Coulter counter method or by microscopy.

Inert inorganic fillers that can be used in this invention include calcium carbonate, silica, diatomaceous earth, barium sulfate, titanium dioxide, and clays. Preferred fillers are calcium carbonate, silica, and barium sulfate.

An important component of the composition of the film of this invention is the processing aid which is calcium stearate, zinc stearate, oleic acid or stearic acid. This component is used in high levels in order to obtain uniaxially oriented film at the high filler loading levels; from 0.1 to 2.5% by weight (or 0.2-5% by volume) of the processing aid, which is preferably calcium stearate, is used in the invention.

An antioxidant stabilizer is optional but preferable in the film of the present invention. Examples of antioxidants that can be used in the present invention are tetrakis(methylene(3,5-di-t-butyl-4-hydroxyhydrocinnamate))methane (this antioxidant is marketed commercially under the trademark IRGANOX 1010), tris (2,4-di-t-butylphenyl)phosphite (marketed commercially under the trademark IRGAPHOS 168), dilaurylthiodipropionate (this is a thioester), and N,N'-diphenyl-p-phenylenediamine (an aryl amine). Up to 1.5% by weight (or 0-3% by volume), more preferably 0.50% by weight (or up to 2% by volume) of the stabilizer may be used in the film.

The composition of this invention can be prepared by conventional blending techniques using such equipment as two-roll mills, Banbury mixers, twin-screw extruders, or shell blenders. The polymeric ingredients may be mixed together in a first step and then the other ingredients added into the blend. Alternately, the entire blending operation can be performed in a single step.

After the ingredients of the composition of this invention have been melt blended, the moisture level of the blend is maintained below 700 parts per million (ppm) (preferably below 300 ppm). A preferred method for maintaining the moisture content at the desired levels is to cool extruded strands on a moving conveyor belt using flowing air. This air-cooling method yields strands and pellets that have residual moisture levels far below the levels achieved by the water-bath-cooling process typical in the industry.

The accompanying table demonstrates that the less time the extruded strands are in contact with liquid water, the lower is the residual moisture content of the pellets produced. Low residual moisture content in the pellets in turn gives rise to a low moisture level within the melt in the extruder. Finally, the low moisture level in the melt allows the formation of a smooth casting that can be oriented uniaxially at least 5 times its original length, and preferably at least 6.5 times its original length. Thus, the following Table A shows that air-cooling without moisture contact gives the driest pellets, the smoothest casting, and the most highly-oriented and smooth film.

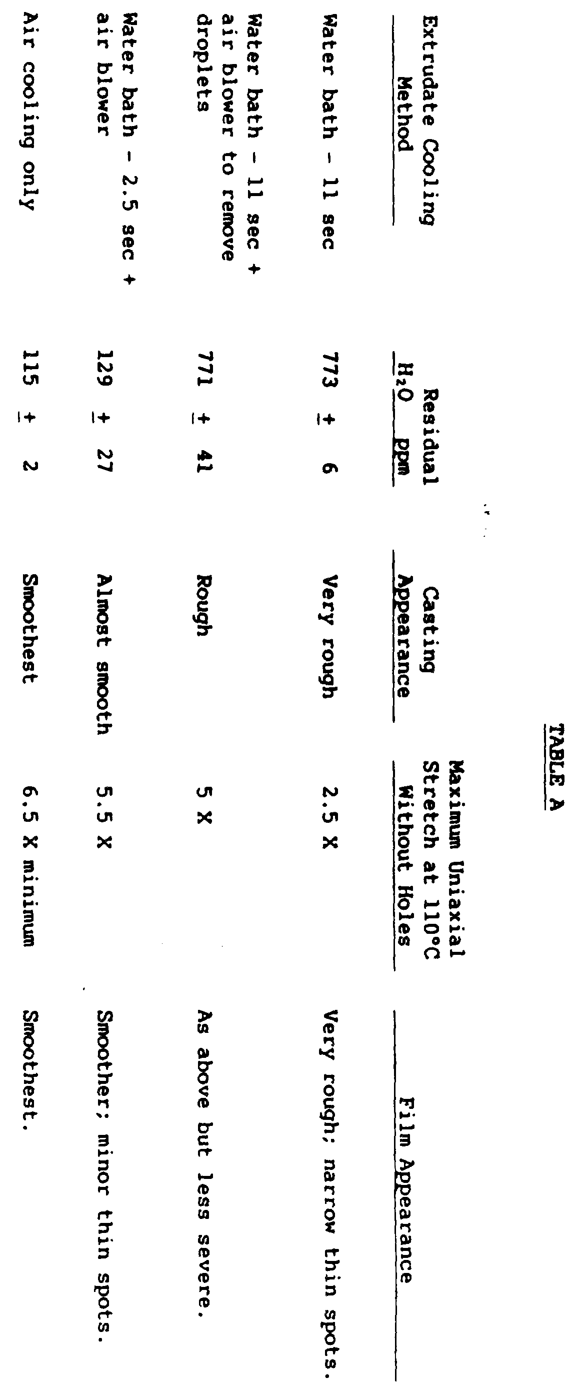

Another process of maintaining the desired moisture level is to employ vacuum drying in order to reduce the moisture level in too-wet pellets to acceptable levels (below 700 ppm, and preferably below 300 ppm). In this case, pellets composed of polymer plus filler would be made using a water-bath-cooling process such that the residual moisture level is excessive. These too-wet pellets can be subjected to a partial vacuum, preferably with some heating to speed the process, for a period of time until the moisture content is within acceptable limits as defined above. This process works but is not the preferred one since an extra process, vacuum-drying, is required.

Yet another process of maintaining the desired moisture level is by charging the hot melt directly to the extruder that extrudes the casting from a die. In this case, the molten composition is never exposed to liquid water and, thus, has a low residual moisture level as defined above. Therefore, a smooth and highly-orientable casting will be formed.

To accurately achieve this moisture level, sensitive moisture measurement techniques are required. For example, a Coulometric Karl Fischer titration method (using the Brinkman Model 652 RF Coulometer) was used successfully for verifying the desired moisture level in the formulations. The strands were then pelletized using conventional techniques in the industry.

The composition of the present invention can be formed into a sheet or film by any of the techniques commonly available to the converter, such as flat die extrusion, blown film extrusion, or extrusion into a calendering stack. For special applications, sheets may be also fabricated by compression or injection molding.

A crucial feature of the present invention is the necessity for specific conditions of stretching, in order to obtain the desired altered surface and microporous properties. Stretching of plastic films is well known in the art and is commonly conducted for the purpose of obtaining molecular orientation leading to improved physical properties such as increased tensile modulus, reduced elongation, and often increased tensile strength. It is known that in order to orient crystalline polymers such as polyethylene and polypropylene, stretching must be conducted within a fairly well defined range of temperatures, commonly designated as the "orientation temperature range". This temperature is approximately equivalent to temperatures above which the crystallites begin to melt, but below the temperature at which crystallites are no longer discernible.

The method of the present invention requires that the stretching be conducted at temperatures from about 20°C to about 160°C. When stretched monoaxially, the film exhibits a higher tensile strength in the direction of stretching, i.e., the machine direction, than in the transverse direction. Stretching breaches the bond between the polymer matrix and the inert filler creating voids (i.e., micropores) in the polymer matrix and a fibrous surface with ruptures on the surface of the film. Increasing the stretch ratio within the limits of the film increases the number and size of voids in the polymer matrix causing an increase in the opacity of the film and a decrease in the density. There can be a continuous path through the film only when the voids are large enough and numerous enough to provide enough interconnections to create a continuous pathway for gas flow through the film. Because of the long narrow pore shapes in uniaxial polypropylene film loaded with CaCO₃, the degree of interconnectivity of pores tends to be much lower than for a similar film stretched in both directions, because the length of the pores, the interconnectivity, and thus the permeability increases with increasing stretching.

The uniaxially oriented plastic film of the present invention has O₂ permeances in the range of 77,500 to 155,000,000 cc/m atm-day (5,000 to 10,000,000 cc/100 in-atm-day) and CO₂:O₂ gas separation ratio of about 1. The uniaxial orientation process makes the temperature range for processing ("the processing window") at least 50°C. In other words, in each case the film permeability can be controlled by adjusting the uniaxial orientation temperature and degree of orientation in a broad range.

The uniaxial film of this invention was found to be uniquely adapted for use in controlled-atmosphere packaging containers where the atmosphere inside the container is controlled by the use of this film as a gas-permeable panel in a window in one or more of the container's walls; the container otherwise is constructed of a substantially gas-impermeable material. This film provides a controlled flow or flux of CO₂ and O₂ through its wall at a permeance of 77,500 to 155,000,000 cc/m atm-day (5,000-10,000,000 cc/100 in-atm-day), with a standard deviation of the permeance in the range of less than 35%, and preferably less than 20%, and a CO₂:O₂ ratio of 1. The permeance and area of the panel (membrane) of the container is such as to provide a flux of O₂ and CO₂ approximately equal to the predicted O₂ respiration rate for not more than 3.0 kg (6.6 lb) of enclosed fruit, vegetable, or flowers.

The ability to control the atmosphere within the container is derived not only from the ability to adjust the area of the permeable plastic membrane that allows communication between the interior and exterior of the container, but also from the ability to select the permeance of the panel to adapt a variety of produce of fresh fruits, vegetables and flowers.

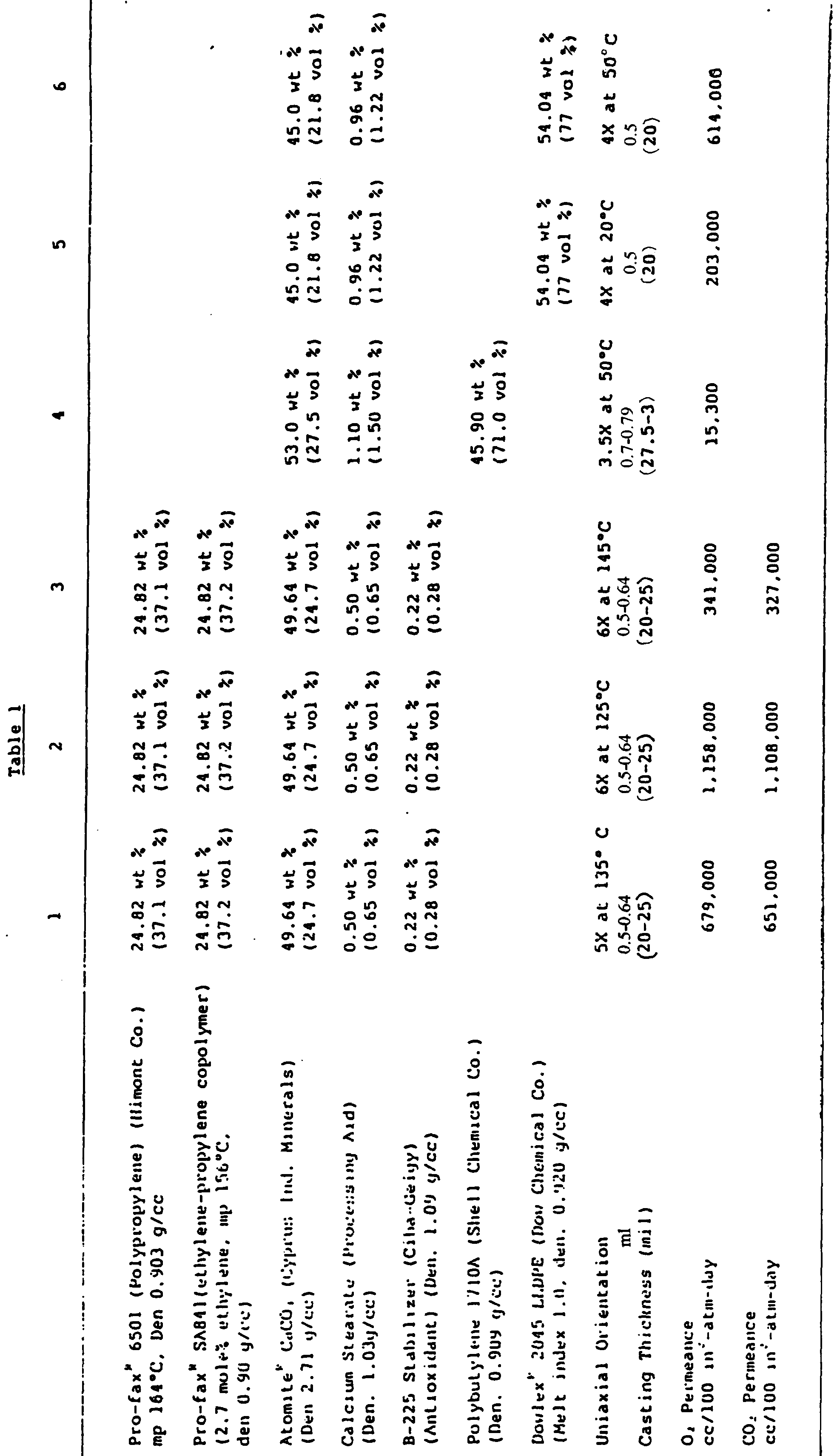

### EXAMPLES 1-6

In each of the following examples, the CAP film was prepared by melt blending in a mixer a polymer, an inert filler, a processing aid, and a stabilizer, extruding the melt blend into strands, cooling the strands so as to maintain the moisture level in them below 700 ppm, pelletizing the strands, casting a film from the strands, cooling the film to a temperature below the melting point of the film, and uniaxially orienting the film in a T.M. Long stretcher or forward draw unit. The film was stretched down to a thickness of about 0.1524-0.1651 ml or 6.0-6.5 mils (0.305 ml or 12 mils for Example 4 and 0.343 ml or 13.5 mils for Example 5). For Examples 1 to 6 the blend was pelletized in a twin screw extruder and later extruded through a 406 ml or 16-inch wide slit die (152 ml or 6 inch wide slit die for Example 5) at a melt temperature of 261°C (217°C for Example 4 and 250°C for Example 5) to form a casting. The results are recorded in Table 1, infra. The particle sizes of the filler in these Examples averaged 3 µm. Similar results were also obtained using particle sizes of filler of 1 µm and 12 µm using the T.M. Long stretcher.

Examples 4-10 are comparative examples.

For the sake of comparison, the same composition as in Examples 1-3 was given a biaxial orientation at a series of tenter oven temperatures. In each case the casting was first oriented in the forward direction 5X at setting temperature 120°C. A 3.5X (approx.) transverse draw was then applied at the series of temperatures listed below. (In each case the temperature quoted was the "setting" temperature for the stretching zone of the tenter). The oxygen permeances, as shown below, are much too high at most orientation temperatures; at high orientation temperature the permeability falls abruptly to a very low level in a very narrow temperature interval.

| CD Orientation | O₂ Permeance | |
|---|---|---|
| Setting Temp (C) | cc/100 in-atm-day | cc/m-atm-day |
| 154 | 32,500,000 | 503,750,000 |
| 160 | 17,900,000 | 277,450,000 |
| 166 | 8,940,000 | 138,570,000 |
| 171 | 2,230,000 | 34,565,000 |
| 175 | less than 5000; | film was melting and changing from opaque to translucent |

### EXAMPLES 7-11

Quantities of vegetables (i.e., mushrooms, celery sticks and broccoli) were placed in tightly-sealed glass vessels held at 4°C in a refrigerator. The internal atmosphere of the vessels communicated with the external atmosphere only through a microporous film panel of the uniaxially oriented film of Examples 1-3 and 6; the circular panel covered an aperture in the top of the glass vessels. The initial gas composition in the vessels was about 21% by volume of O₂, about 0.03% of CO₂, and about 78% of N₂. The results of these tests are reported in Table 2, below.

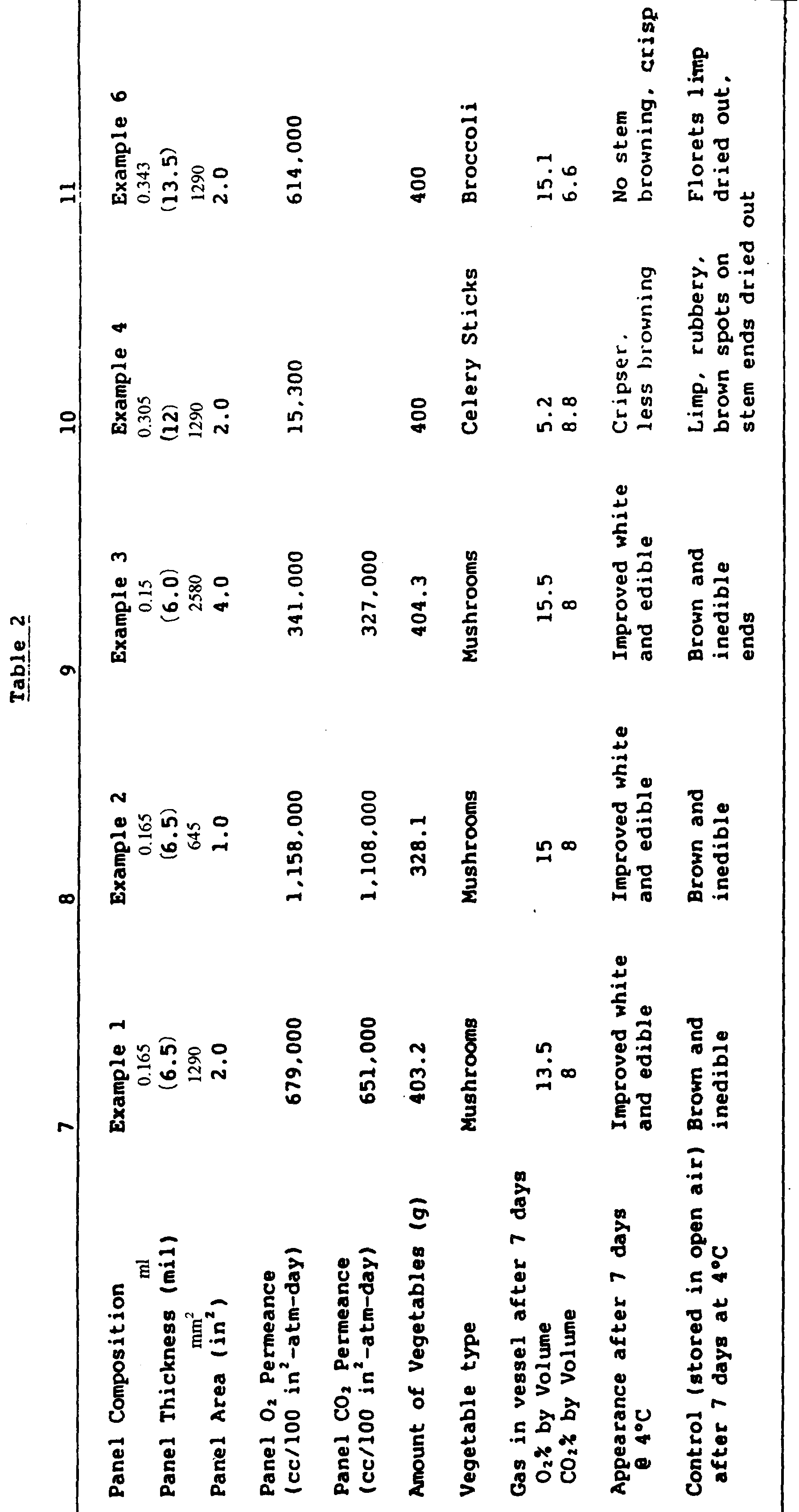

## Claims

1. A process for preparing a controlled atmosphere packaging (CAP) film in which a thermoplastic polymer is filled with an inert filler, cast into a sheet, and stretched to form an oriented film, characterized by
a) melt blending in a vessel in a temperature range of 150°-300°C the ingredients
i) 36-60% by weight (or 64-84% by volume) of a polymer selected from the group of polypropylene homopolymers and copolymers,
ii) 36 - 60% by weight (or 15-34% by volume) of an inert filler based on the weight of the polymer and filler, said filler having an average particle size of 0.3 to 14 µm,
iii) 0.1 - 2.5% by weight (or 0.2-5% by volume) of a processing aid which is calcium stearate, zinc stearate, oleic acid or stearic acid, and
iv) 0-1.5% by weight (or 0-3% by volume) of a stabilizer
b) maintaining the moisture level in the melt blend below 700 ppm,
c) casting a film,
d) cooling the film to a temperature below the melting point of the film,
e) stretching the film in one of its dimensions at least about two times the corresponding original casting dimension with the temperature of the film during stretching being within a temperature range of 20 to 160°C and being above the line-drawing temperature and below the melting temperature of the polymer, the said uniaxial stretching of the film is terminated when the film has a CO₂ and O₂ permeance in the range of 77,500 to 155,000,000 cc/m-atm-day (5,000 to 10,000,000 cc/100 in-atm-day) with a standard deviation of the permeance in the range of less than 35%, and
f) cooling the film to room temperature.

2. A process for preparing a CAP film as claimed in claim 1, further characterized in that the step b) of maintaining the moisture level in the melt blend below 700 ppm is performed by either (i) extruding the melt blend into strands, cooling the strands in a water bath or with flowing air, and pelletizing the strands, or (ii) directly casting the hot melt blend into a film.

3. A process for preparing a CAP film as claimed in claim 1 or 2, further characterized in that the moisture level in the melt blend is maintained below 300 ppm, and the film is stretched uniaxially at least about 6.5 times its original casting dimensions.

4. A process for preparing a CAP film as claimed in claim 1, 2 or 3, further characterized in that the processing aid is calcium stearate.

5. A process for preparing a CAP film as claimed in any of the preceding claims, further characterized in that the inert filler is calcium carbonate, silica, diatomaceous earth, barium sulfate, titanium dioxide or a particulate clay.

6. A process for preparing a CAP film as claimed in any preceding claim, further characterized in that the amount of inert filler is 40 to 55% by weight (or 18 to 29% by volume).

7. A process for preparing a CAP film as claimed in any of claims 1 - 6 further characterized in that the resulting film has a ratio of CO₂ and O₂ permeance of 1.

8. Use of the process according to claims 1 to 7 for preparing a CAP film used as a panel in a side of a container for the controlled atmosphere storage of fresh fruits and vegetables.

9. Use as claimed in claim 8 further characterized in that the material of the container apart from the panel is substantially gas-impermeable.

## Patentansprüche

1. Verfahren zur Herstellung einer Folie zum Verpacken in kontrollierter Atmosphäre (CAP), bei welchem ein thermoplastisches Polymer mit einem inerten Füllmaterial gefüllt wird, in eine Fläche gegossen wird und gestreckt wird, um eine orientierte Folie zu bilden, gekennzeichnet durch
a) Mischen durch Schmelzen in einem Behälter in einem Temperaturbereich von 150°-300°C der Bestandteile
i) 36-60 Gewichtsprozent (oder 64-84 Volumenprozent) eines Polymers, ausgewählt aus der Gruppe der Polypropylen-Homopolymere und -Copolymere,
ii) 36-60 Gewichtsprozent (oder 15-34 Volumenprozent) eines inerten Füllmaterials auf der Basis des Gewichts des Polymers und des Füllmaterials, wobei das Füllmaterial eine durchschnittliche Teilchengröße von 0,3 bis 14 µm aufweist,
iii) 0,1-2,5 Gewichtsprozent (oder 0,2-5 Volumenprozent) eines Verarbeitungshilfsmittels, welches Calciumstearat, Zinkstearat, Ölsäure oder Stearinsäure ist, und
iv) 0-1,5 Gewichtsprozent (oder 0-3 Volumenprozent) eines Stabilisators,
b) Halten des Feuchtigkeitspegels in der Schmelzmischung auf einem Wert von weniger als 700 ppm,
c) Gießen einer Folie,
d) Abkühlen der Folie auf eine Temperatur unterhalb des Schmelzpunktes der Folie,
e) Strecken der Folie in einer ihrer Dimensionen auf eine Größe, die mindestens ca. doppelt so groß ist wie ihre ursprüngliche Gußgröße, wobei die Temperatur der Folie während des Streckens in einem Temperaturbereich von 20 bis 160°C sowie über der Einschnürungstemperatur (line-drawing temperature) und unterhalb der Schmelztemperatur des Polymers liegt, wobei das uniaxiale Strecken der Folie beendet wird, wenn die Folie eine CO₂- und O₂- Durchlässigkeit im Bereich von 77 500 bis 155 000 000 cm³/(m x atm x Tag) (5 000 bis 10 000 000 cm³/(100 in x atm x Tag)) hat mit einer Standardabweichung der Durchlässigkeit im Bereich von weniger als 35%, und
f) Kühlen der Folie auf Raumtemperatur.

2. Verfahren zum Herstellen einer CAP-Folie nach Anspruch 1, weiterhin dadurch gekennzeichnet, daß Schritt b) zum Halten des Feuchtigkeitspegels in der Schmelzmischung auf einem Wert von weniger als 700 ppm entweder durch (i) Extrudieren der Schmelzmischung in Stränge, Kühlen der Stränge in einem Wasserbad oder mit strömender Luft und Pelletisieren der Stränge oder (ii) durch direktes Gießen der heißen Schmelzmischung in eine Folie durchgeführt wird.

3. Verfahren zur Herstellung einer CAP-Folie nach Anspruch 1 oder 2, weiterhin dadurch gekennzeichnet, daß der Feuchtigkeitspegel in der Schmelzmischung auf einem Wert von weniger als 300 ppm gehalten wird und die Folie uniaxial auf eine Größe gestreckt wird, die mindestens ca. 6,5 mal so groß ist wie ihre ursprüngliche Gußgröße.

4. Verfahren zur Herstellung einer CAP-Folie nach Anspruch 1, 2 oder 3, weiterhin dadurch gekennzeichnet, daß das Verarbeitungshilfsmittel Calciumstearat ist.

5. Verfahren zur Herstellung einer CAP-Folie nach einem der vorhergehenden Ansprüche, weiterhin dadurch gekennzeichnet, daß das inerte Füllmaterial Calciumkarbonat, Siliciumdioxid, Diatomeenerde, Bariumsulfat, Titandioxid oder ein Partikel-Ton ist.

6. Verfahren zur Herstellung einer CAP-Folie nach einem der vorhergehenden Ansprüche, weiterhin dadurch gekennzeichnet, daß die Menge an inertem Füllmaterial 40 bis 55 Gewichtsprozent (oder 18 bis 29 Volumenprozent) beträgt.

7. Verfahren zur Herstellung einer CAP-Folie nach einem der Ansprüche 1 bis 6, weiterhin dadurch gekennzeichnet, daß die resultierende Folie ein CO₂- und O₂-Durchlässigkeitsverhältnis von 1 hat.

8. Verwendung des Verfahrens gemäß den Ansprüchen 1 bis 7 zur Herstellung einer CAP-Folie, die als eine Platte in einer Seite eines Behälters für das Speichern von frischen Früchten und Gemüse in kontrollierter Atmosphäre verwendet wird.

9. Verwendung nach Anspruch 8, weiterhin dadurch gekennzeichnet, daß das Material des Behälters mit Ausnahme der Platte im wesentlichen gasundurchlässig ist.

## Revendications

1. Processus de préparation d'un film d'emballage sous atmosphère contrôlée (EAC) dans lequel un polymère thermoplastique est rempli avec une matière de remplissage inerte, coulé dans une feuille et soumis à une traction pour former un film étiré, caractérisé par :
a) le mélange en fusion dans un récipient, dans une plage de températures de 150 à 300°C des ingrédients suivants :
i) de 36 à 60 % en poids (ou de 64 à 84 % en volume) d'un polymère sélectionné dans un groupe d'homopolymères et de copolymères polypropylènes,
ii) de 36 à 60 % en poids (ou de 15 à 34 % en volume) d'une matière de remplissage inerte basée sur le poids du polymère et de la matière de remplissage, ladite matière de remplissage ayant une granulométrie moyenne de 0,3 à 14 µm,
iii) de 0,1 à 2,5 % en poids (ou de 0,2 à 5 % en volume) d'un support de traitement qui est du stéarate de calcium, du stéarate de zinc, de l'acide oléique ou de l'acide stéarique, et
iv) de 0 à 1,5 % en poids (ou de 0 à 3 % en volume) d'un stabilisant
b) le maintien d'un niveau d'humidité dans le mélange en fusion à moins de 700 ppm,
c) la coulée d'un film,
d) le refroidissement du film jusqu'à une température inférieure au point de fusion du film,
e) la soumission du film à une traction selon l'une de ses dimensions, d'au moins deux fois la dimension de coulée originale correspondante, la température du film pendant l'application de la traction étant comprise dans une plage de températures de 20 à 160°C et étant supérieure à la température de dessin linéaire et inférieure à la température de fusion du polymère, ladite application de la traction uniaxiale au film étant terminée lorsque le film a une perméance au CO₂ et au 0₂ dans une plage de 77 500 à 155 000 000 cc/m-atm-jour (5 000 à 10 000 000 cc/100 pouces-atm-jour) avec une déviation standard de la perméance dans une plage inférieure à 35 %, et
f) le refroidissement du film à la température ambiante.

2. Processus de préparation d'un film EAC selon la revendication 1, caractérisé en outre en ce que l'étape b) du maintien du niveau d'humidité dans le mélange en fusion en dessous de 700 ppm est réalisé ou bien en (i) extrudant le mélange en fusion en brins, et en transformant en boulettes les brins, ou bien en (ii) coulant directement le mélange chaud en fusion en un film.

3. Processus de préparation d'un film EAC selon les revendications 1 ou 2, caractérisé en outre en ce que le niveau d'humidité du mélange en fusion est maintenu en dessous de 300 ppm, et le film est soumis à une traction uniaxiale d'au moins environ 6,5 fois ses dimensions de coulée originales.

4. Processus de préparation d'un film EAC selon les revendications 1, 2 ou 3, caractérisé en outre en ce que le support de traitement est le stéarate de calcium.

5. Processus de préparation d'un film EAC selon l'une quelconque des précédentes revendications, caractérisé en outre en ce que la matière de remplissage inerte est du carbonate de calcium, de la silice, de la diatomite, de la barytine, du blanc de titane ou un argile particulier.

6. Processus de préparation d'un film EAC selon l'une quelconque des précédentes revendications, caractérisé en outre en ce que la quantité de matière de remplissage inerte est de 40 à 55 % en poids (ou de 18 à 29 % en volume).

7. Processus de préparation d'un film EAC selon l'une quelconque des revendications 1 à 6 caractérisé en outre en ce que le film obtenu a un rapport de perméance au CO₂ et 02 égal à 1.

8. Utilisation du processus selon les revendications 1 à 7 pour la préparation d'un panneau sur un côté d'un conteneur pour le stockage sous atmosphère contrôlée de fruits et légumes frais.

9. Utilisation selon la revendication 8, caractérisée en outre en ce que le matériau du conteneur, à part le panneau, est essentiellement imperméable au gaz.
